(19) Europäisches Patentamt / European Patent Office / Office européen des brevets

(11) **EP 3 355 476 B1**

(12) **EUROPEAN PATENT SPECIFICATION**

(45) Date of publication and mention of the grant of the patent:
**29.03.2023 Bulletin 2023/13**

(21) Application number: **15904785.1**

(22) Date of filing: **02.11.2015**

(51) International Patent Classification (IPC):
**G09C 1/00** *(2006.01)*

(52) Cooperative Patent Classification (CPC):
**G09C 1/00**

(86) International application number:
**PCT/KR2015/011658**

(87) International publication number:
**WO 2017/051974 (30.03.2017 Gazette 2017/13)**

(54) **DIGITAL SIGNAL PROCESSING APPARATUS AND METHOD**

DIGITALE SIGNALVERARBEITUNGSVORRICHTUNG UND -VERFAHREN

APPAREIL ET PROCÉDÉ DE TRAITEMENT DE SIGNAUX NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2015 KR 20150135513**

(43) Date of publication of application:
**01.08.2018 Bulletin 2018/31**

(73) Proprietor: **Korea Railroad Research Institute**
**Uiwang-si, Gyeonggi-do 16105 (KR)**

(72) Inventors:
- **PARK, Sung Soo**
  **Yongin-si**
  **Gyeonggi-do 16875 (KR)**
- **LEE, Jae Ho**
  **Suwon-si**
  **Gyeonggi-do 16336 (KR)**
- **SHIN, Dong Joon**
  **Seoul 06007 (KR)**
- **KWON, Soon Hee**
  **Cheongju-si**
  **Chungcheongbuk-do 28752 (KR)**

(74) Representative: **Manitz Finsterwald**
**Patent- und Rechtsanwaltspartnerschaft mbB**
**Martin-Greif-Strasse 1**
**80336 München (DE)**

(56) References cited:
**KR-A- 930 018 887    KR-A- 950 002 297**
**KR-A- 20060 049 298    KR-A- 20100 062 730**
**KR-B1- 100 432 987    US-B1- 6 598 203**

- **JOSE FRANCA ET AL: "Multirate Analog-Digital Systems for Signal Processing and Conversion", PROCEEDINGS OF THE IEEE, IEEE. NEW YORK, US, vol. 85, no. 2, 1 February 1997 (1997-02-01), XP011043808, ISSN: 0018-9219**
- **NARENDRAN B ET AL: "Parallel computation of LFSR signatures", TEST SYMPOSIUM, 1993., PROCEEDINGS OF THE SECOND ASIAN BEIJING, CHINA 16-18 NOV. 1, LOS ALAMITOS, CA, USA,IEEE COMPUT. SOC, 16 November 1993 (1993-11-16), pages 75-80, XP010138096, DOI: 10.1109/ATS.1993.398783 ISBN: 978-0-8186-3930-2**

**Description**

TECHNICAL FIELD

The present disclosure relates to a digital signal processing apparatus and method based on a shift register.

BACKGROUND

Various communication apparatuses or digital devices perform a process for decoding or encoding data to transmit a digital data signal. The decoding process includes a process for descrambling data bits scrambled during the encoding process. A descrambling shift register circuit is used for descrambling.

The clock speed has increased by advances in hardware technology, and, thus, even when an output value is calculated using a linear feed forward shift register, the time required is not much increased. However, if there is a large number of input values to be processed in some application fields, a serial processing method may have limitations, and a parallel processing method using multiple linear feed forward shift registers needs to be used.

Meanwhile, even in the field of railway technology, the number of areas requiring the above-described digital signal process has been increasing.

For example, in Europe, the Eurobalise protocol was established and has been commonly used in order to standardize railway management systems of different countries and efficiently manage trains. According to the Eurobalise protocol, a balise is placed on a railway and used to receive position information about trains to improve the stability and efficiency of railway traffic. That is, the balise transmits a telegram including information to be transmitted to a train and the train checks position information or the like from the telegram.

Even in Korea, studies on a train position detecting system based on the Eurobalise protocol are being actively conducted for the sake of the stability and efficiency of railway traffic. To this end, the position of a train needs to be detected accurately. To accurately detect the position of a train, a telegram transmitted from a balise and then received by a reader of the train needs to be rapidly decoded to acquire information.

For example, telegrams can be classified into a long telegram with 830 data bits and a short telegram with 210 data bits. To descramble a telegram, the long telegram requires 830 clocks and the short telegram requires 210 clocks. Therefore, the long telegram requires about 4 times more clocks than the short telegram, and, thus, there is a difference in processing time between the two telegrams.

Accordingly, the present disclosure suggests a method for processing digital signals in parallel using multiple linear feed forward shift registers.

The suggested parallel processing method can solve the problem of a difference in descrambling speed between a long telegram and a short telegram and also reduce the processing time for each of the two telegrams.

In this regard, Korean Patent Laid-open Publication No. 10-2015-0039141 (entitled "Multiple parallel data output circuit using a signal serial output") discloses the invention relating to a data output circuit. The invention relates to a multiple parallel data output circuit using a single serial output and configured to provide data, which is provided as a single serial output from a CPU, as multiple parallel data outputs. The invention includes multiple registers configured to receive serial input data and output the data in parallel, and is configured to provide a serial data output from the CPU as input data to a register, provide a serial output from the register as an input to a D-flipflop, and provide an output from the D-flipflop as input data to a register on a next stage.

A digital signal processing apparatus according to the preamble of claim 1 is disclosed in US 6,598,203 B1. Further prior art is known from XP011043808 (ISSN: 0018-9219).

DISCLOSURE OF THE INVENTION

PROBLEMS TO BE SOLVED BY THE INVENTION

It is an object of the present disclosure to provide an apparatus and method for processing digital signals more rapidly by connecting multiple linear feed forward shift registers in parallel to one another.

However, problems to be solved by the present disclosure are not limited to the above-described problems. There may be other problems to be solved by the present disclosure.

MEANS FOR SOLVING THE PROBLEMS

The above-described technical problem is solved by the subject-matter of the independent claims.

EFFECTS OF THE INVENTION

According to any one of the aspects of the present disclosure, multiple linear feed forward shift registers are connected in parallel to one another to divide and process input values, forward shift registers and couple the output values to generate M number of output signals in which N number of output values are sequentially connected.

EFFECTS OF THE INVENTION

According to any one of the aspects of the present disclosure, multiple linear feed forward shift registers are connected in parallel to one another to divide and process input values, and, thus, it is possible to remarkably reduce the number of clocks required to process all of the input values. Therefore, the reduction in time required to process all of digital signals expected.

BRIEF DESCRIPTION OF THE DRAWINGS

FIG. 1 is a diagram illustrating a digital signal processing apparatus based on a linear feed forward shift register according to an embodiment of the present disclosure.
FIG. 2 is a diagram provided to explain a configuration of a linear feed forward shift register used in a digital signal processing apparatus according to an embodiment of the present disclosure.
FIG. 3 is a diagram provided to explain a process for generating an output signal by an output unit according to an embodiment of the present disclosure.
FIG. 4 is a diagram provided to explain digital signal processing according to an embodiment of the present disclosure.
FIG. 5 is a diagram provided to explain digital signal processing according to an embodiment of the present disclosure.
FIG. 6 is a diagram illustrating a digital signal processing apparatus according to another embodiment of the present disclosure.
FIG. 7 is a diagram provided to explain digital signal processing according to another embodiment of the present disclosure.
FIG. 8 is a diagram provided to explain digital signal processing according to another embodiment of the present disclosure.
FIG. 9 is a flowchart provided to explain a signal processing method using a digital signal processing apparatus according to an embodiment of the present disclosure.

MODE FOR CARRYING OUT THE INVENTION

Hereinafter, embodiments of the present disclosure will be described in detail with reference to the accompanying drawings so that the present disclosure may be readily implemented by those skilled in the art. However, it is to be noted that the present disclosure is not limited to the embodiments but can be embodied in various other ways. In drawings, parts irrelevant to the description are omitted for the simplicity of explanation, and like reference numerals denote like parts through the whole document.
Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.
In the present specification, some of operations or functions described as being performed by a device may be performed by a server connected to the device. Likewise, some of operations or functions described as being performed by a server may be performed by a device connected to the server.
The following embodiments are provided only for understanding of the present invention but not intended to limit the right scope of the present invention, which is defined by the independent claims.

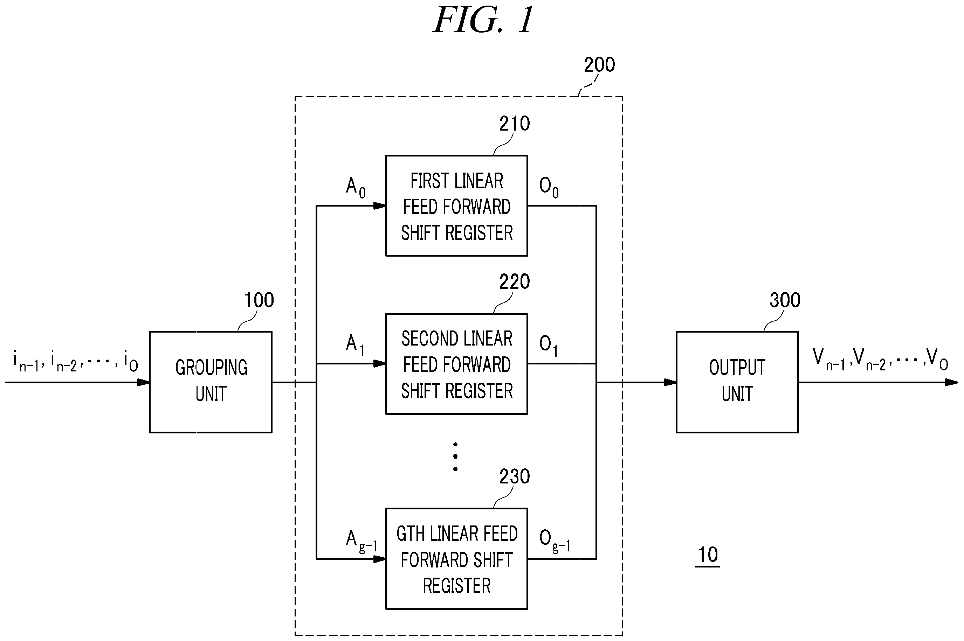

FIG. 1 is a diagram illustrating a digital signal processing apparatus based on a linear feed forward shift register according to an embodiment of the present disclosure.
A digital signal processing apparatus 10 includes a grouping unit 100, multiple linear feed forward shift registers 200, and an output unit 300. Meanwhile, the digital signal processing apparatus 10 may further include a component to generate or receive an input signal to be input into the grouping unit 100 and a component to receive an output signal output from the output unit 300 and then perform an after-treatment.

For reference, each of components illustrated in FIG. 1 according to an embodiment of the present disclosure may imply software or hardware such as a field programmable gate array (FPGA) or an application specific integrated circuit (ASIC), and they carry out predetermined functions.

However, the components are not limited to the software or the hardware, and each of the components may be stored in an addressable storage medium or may be configured to implement one or more processors.

Accordingly, the components may include, for example, software, object-oriented software, classes, tasks, processes, functions, attributes, procedures, sub-routines, segments of program codes, drivers, firmware, micro codes, circuits, data, database, data structures, tables, arrays, variables and the like.

The components and functions thereof can be combined with each other or can be divided up into additional components.

The grouping unit 100 performs a pre-treatment by dividing input signals, which are successively input, into multiple groups for parallel processing. That is, the grouping unit 100 divides input signals, in which N number of input values are sequentially connected, into G number of groups. The input signal groups divided as described above are input into the linear feed forward shift registers, respectively.

For example, a single input signal, in which N number of input values are sequentially connected, is divided into G number of groups including $P_0$, $P_1$, ......, and $P_{g-1}$ number of input values, respectively. Herein, $P_0+P_1+......+P_{g-1}$ equals to n. Further, zero padding is performed at the tail of each group K number of times corresponding to the number of data storage units included in a linear feed forward shift register to generate N number of input signal groups. Therefore, the numbers of values included in the input signal groups are $P_0+k$, $P_1+k$,......, and $P_{g-1}+k$, respectively.

For example, an input signal includes multiple input values $i_0$, $i_1$,......, $i_{n-1}$ which are sequentially connected and input in order of from $i_0$ to $i_{n-1}$. An input signal group is configured as follows.

$$A_0 = (i_o, i_1, ..., i_{p_o-1}, 0, ..., 0),$$

$$A_1 = (i_{p_o}, i_{p_o+1}, ..., i_{p_o+p_1-1}, 0, ..., 0), \ ... \ ,$$

$$A_{g-1} = (i_{p_o+p_1+...+p_{g-2}}, i_{p_o+p_1+...+p_{g-2}+1}, ..., i_{n-2}, i_{n-1}, 0, ..., 0)$$

Zero padding is performed to each input signal group to add K number of Os. Values in each input signal group are sequentially input from the most left value.

The multiple linear feed forward shift registers 200 include first to Gth linear feed forward shift registers 210, 220, and 230 which are connected in parallel to one another.

A structure of each feed forward shift register will be described.

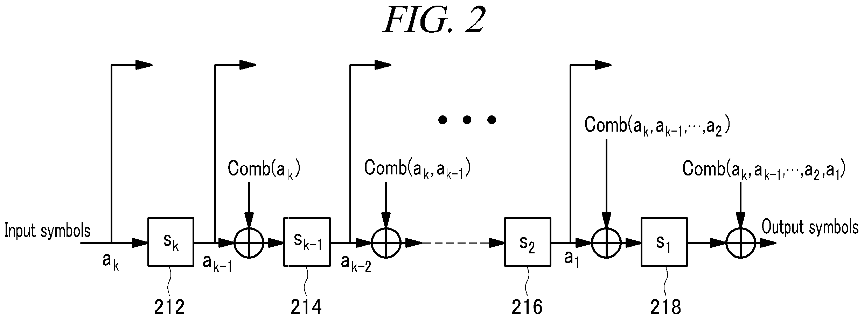

FIG. 2 is a diagram provided to explain a configuration of a linear feed forward shift register used in a digital signal processing apparatus according to an embodiment of the present disclosure.

The linear feed forward shift register sequentially shifts input values forward in synchronization with clocks. Herein, the linear feed forward shift register includes one or more data storage units 212, 214, 216, and 218 each configured to temporarily store data and combined operation elements each configured to sum up a state value of a previous node and a value stored in a data storage unit between the data storage units 212, 214, 216, and 218. For example, the data storage units may be flip flops and various other logic circuits configured to temporarily store data.

A Comb function is defined as $Comb(a_1, a_2, ..., a_l)=c_1a_1+c_2a_2+...+c_la_l$, and $c_i$ (i= 1,2,...,l) refers to a coefficient with a random value. In this case, the coefficient may not be 0, which means that a state value ($a_i$, i=1, 2,...,l) of each node is scaled by the coefficient and then fed forward, and the coefficient may be 0, which means that the state value is not fed forward. The coefficient and a combination state of the Comb function may be determined by the designer's selection.

Meanwhile, in the first linear feed forward shift register 210, an initial value determined by the designer depending on the status of application is stored in each data storage unit, and in data storage units of the other linear feed forward shift registers 220 and 230, a value 0 is stored.

That is, if all of input signals are processed using a single linear feed forward shift register according to the conventional method, it can be confirmed that a value initially stored in a data storage unit is shifted to the right and then the other values are sequentially shifted to the right. Accordingly, even if an initial value is stored only in the first linear feed forward shift register 210 and a value 0 is stored as an initial value in the other linear feed forward shift registers 220 and 230 as described in the present disclosure, the same result can be expected.

As described above, each linear feed forward shift register has the same configuration except an initial value stored in a data storage unit.

The output unit 300 receives output values of the linear feed forward shift registers and couple the output values to generate output signals.

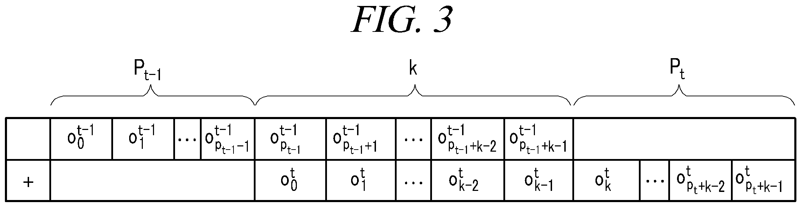

FIG. 3 is a diagram provided to explain a process for generating an output signal by an output unit according to an embodiment of the present disclosure.

Each output signal group output from each linear feed forward shift register may be defined as follows.

$$O_0 = \left( o_0^0, o_1^0, \dots, o_{p_0+k-1}^0 \right) ,$$

$$O_1 = \left( o_0^1, o_1^1, \dots, o_{p_1+k-1}^1 \right) , \quad \cdots \quad ,$$

$$O_{g-1} = \left( o_0^{g-1}, o_1^{g-1}, \dots, o_{p_{g-1}+k-1}^{g-1} \right)$$

Further, as shown in FIG. 3, the output signal groups are sequentially placed in different rows, respectively. That is, each of from a first output signal group O0 output by the first linear feed forward shift register 210 into which a first input signal group $A_0$ is input to a Gth output signal group $O_{g-1}$ output by the Gth linear feed forward shift register 230 into which a Gth input signal group $A_{g-1}$ is input is received and sequentially placed in a different row.

In this case, when a second output signal group is placed after the first output signal group is placed, the second output signal group is shifted by a predetermined value from a column where a first value of the first output signal group is located and then sequentially placed. In this case, the predetermined value refers to the number of input values of an input signal group corresponding to the first output signal group, i.e., the number of input values of each input signal group before zero padding.

In this way, while the first to Gth output signal groups are placed in the respective rows, output values of each output signal group in each column are summed up and then values except values corresponding in number to K, which is the number of data storage units, in the last column are output as output signals.

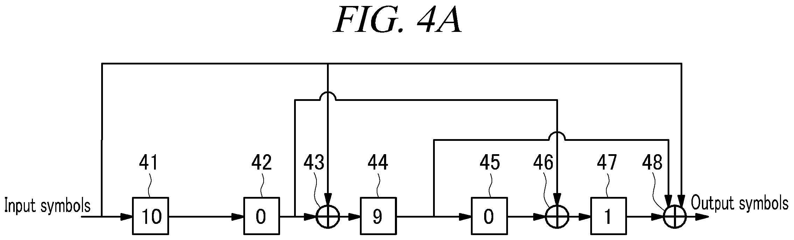

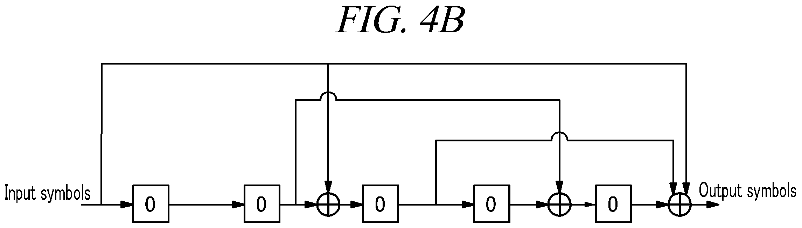

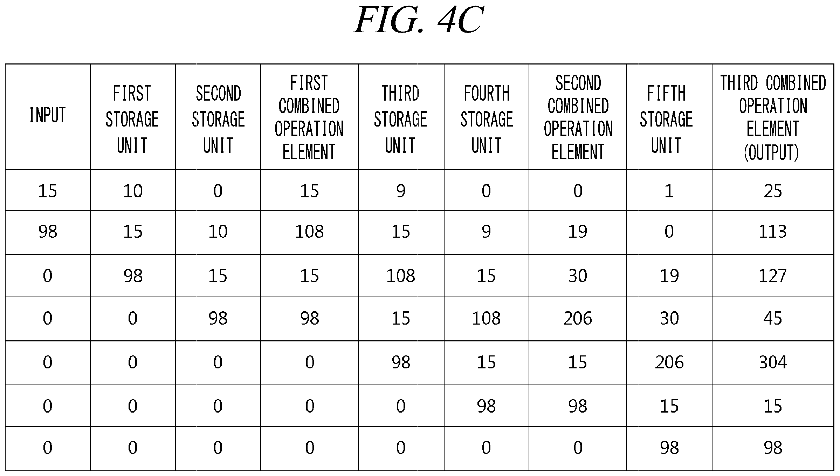

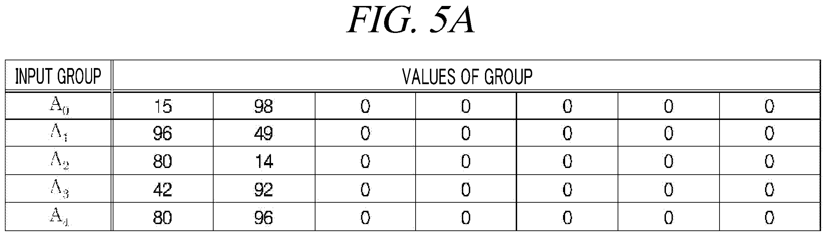

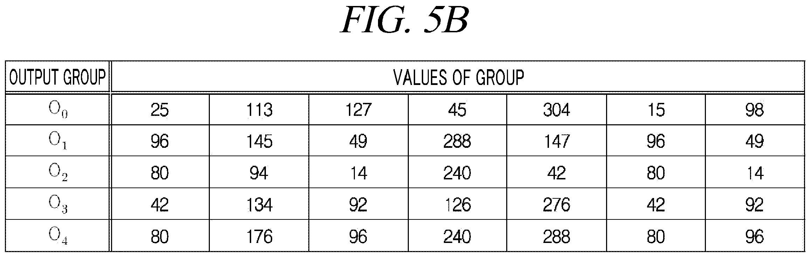

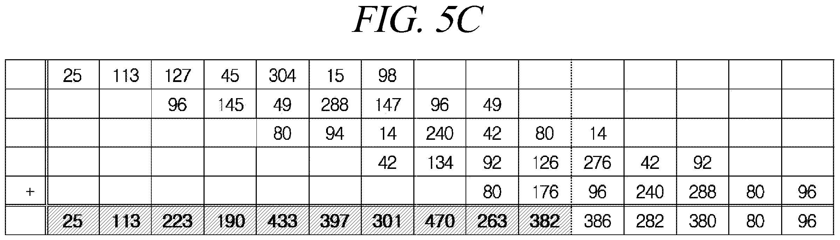

FIG. 4 and FIG. 5 are diagrams provided to explain digital signal processing according to an embodiment of the present disclosure.

FIG. 4A illustrates a linear feed forward shift register including five data storage units 41, 42, 44, 45, and 47 and three combined operation elements 43, 46, and 48. In this case, 1, 0, 9, 0, and 10 are stored as initial values.

Further, FIG. 4B illustrates the same linear feed forward shift register as shown in FIG. 4A, and all of initial values are set to 0.

In this case, it is assumed that input values are 15, 98, 96, 49, 80, 14, 42, 92, 80, and 96 before grouping. If these input values are input into a single linear feed forward shift register, ten clocks corresponding in number to the number of input values are needed. Further, in this condition, the linear feed forward shift register outputs 25, 113, 223, 190, 433, 397, 301, 470, 263, and 382 as output values. The background of this output result will be described again with reference to FIG. 4C.

If a total of five linear feed forward shift registers are connected in parallel to one another, the grouping unit 100 divide the linear feed forward shift registers into a total of five groups. For convenience in explanation, it is assumed that each group includes a total of two input values.

The grouping unit 100 generates a total of five input signal groups, and in this case, the grouping unit 100 pads the tail of each group with five Os to be matched with five which is the number of data storage units.

That is, as illustrated in FIG. 5A, each input signal group includes two actual input values and five Os which are added by zero padding.

Each linear feed forward shift register outputs output signal groups corresponding to the respective input signal groups as shown in FIG. 5B.

The background of the output of each output value will be briefly described as follows.

Referring to FIG. 4C, initial values are stored in the respective first to fifth storage units 41, 42, 44, 45, and 47 of the first linear feed forward shift register and the first to third combined operation elements 43, 46, and 48 are coupled between them.

If 15 is input as a first input value of the first linear feed forward shift register, a total of three values 1, 9, and 15 are input into the third combined operation element 48, and, thus, a first output value is 25. In this case, for convenience in explanation, it is assumed that a coefficient of each combined operation element is 1. In this case, an output value of the first combined operation element 43 is 15 and an output value of the second combined operation element 46 is 0.

Then, if 98 is input as a second input value of the first linear feed forward shift register, each value is shifted to the right and a second output value is output. That is, as each value is shifted, a total of three values 0, 15, and 98 are input into the third combined operation element 48, and, thus, the second output value is 113. In this case, an output value of the first combined operation element 43 is 108 and an output value of the second combined operation element 46 is 19.

The above-described process is performed to all of values included in an input signal group, and detailed values in each stage are shown in the table of FIG. 4C.

As such, the output signal groups are generated corresponding to the respective input signal groups as shown in FIG. 5B. The output signal groups are placed sequentially in different rows, respectively, as shifted by a predetermined value as shown in FIG. 5C.

That is, when a $t+1_{th}$ output signal group is placed after a $t_{th}$ output signal group is placed, the $t+1_{th}$ output signal group is shifted by a predetermined value from a column where a first value of the $t_{th}$ output signal group is located and then sequentially placed. In this case, the predetermined value refers to the number of input values of an input signal group corresponding to a previous output signal group, i.e., the number of input values of each input signal group before zero padding.

Referring to FIG. 5C, it can be confirmed that since the number of input values of each input signal group is 2, the output signal groups are placed as shifted by 2.

In this way, while the output signal groups are placed in the respective rows, output values of each output signal group in each column are summed up and then values (shaded) except values corresponding in number to K in the last column are output as output signals. It can be seen that the summed-up value is identical to the above-described value output using the single linear feed forward shift register.

It can be seen that in the case where the single linear feed forward shift register is used, ten clocks need to be used for a total of ten input values, whereas in the case where the linear feed forward shift registers connected in parallel to one another are used, output values can be acquired using only seven clocks corresponding in number to the number of values included in each input signal group.

That is, according to the present disclosure, all of output values can be obtained using only clocks corresponding in number to the number of values included in each input signal group.

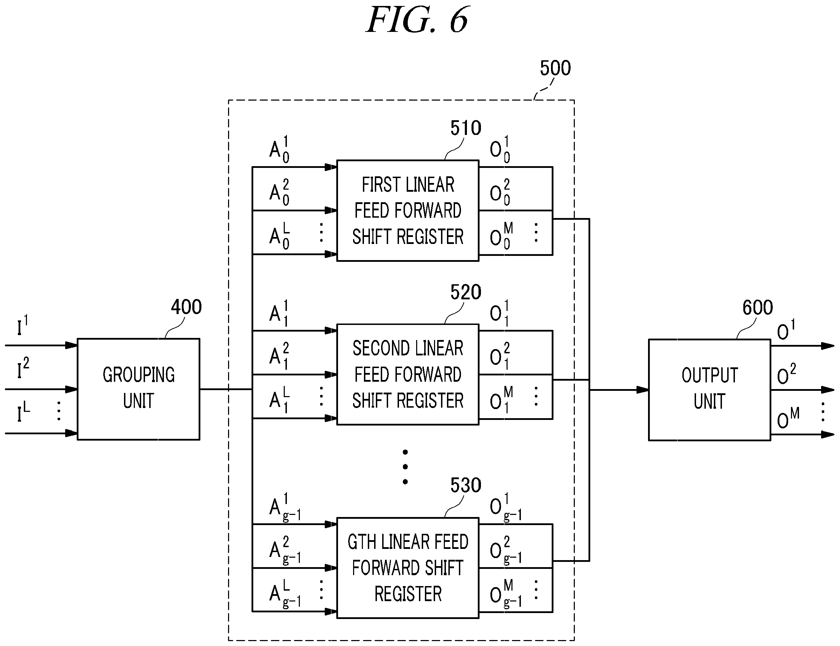

FIG. 6 is a diagram illustrating a digital signal processing apparatus according to another embodiment of the present disclosure.

The present embodiment defines a signal processing method in the case where a single linear feed forward shift register is configured to receive multiple input signals and output multiple output signals. Meanwhile, FIG. 6 illustrates that a linear feed forward shift register receives L number of input signals and generates M number of output signals and can be applied to various other linear feed forward shift registers.

The grouping unit 400 divides L number of input signals, in which N number of input values are sequentially connected, into G number of groups and generates G number of input signal groups for each input signal. In this case, zero padding is performed to each input signal group K number of times corresponding to the number of data storage units as described in the above embodiment. That is, as illustrated in FIG. 6, L number of input signals are received and M number of output signals are output, and if G number of linear feed forward shift registers are connected in parallel to one another, each input signal is divided into G number of input signal groups.

Each of multiple linear feed forward shift registers 510, 520, and 530 includes L number of input signal receiving ports and M number of output signal output ports, and outputs M number of output signals on the basis of L number of input signals.

The output unit 600 receives output values from the respective linear feed forward shift registers and couple the output values to generate M number of output signals in which N number of output values are sequentially connected.

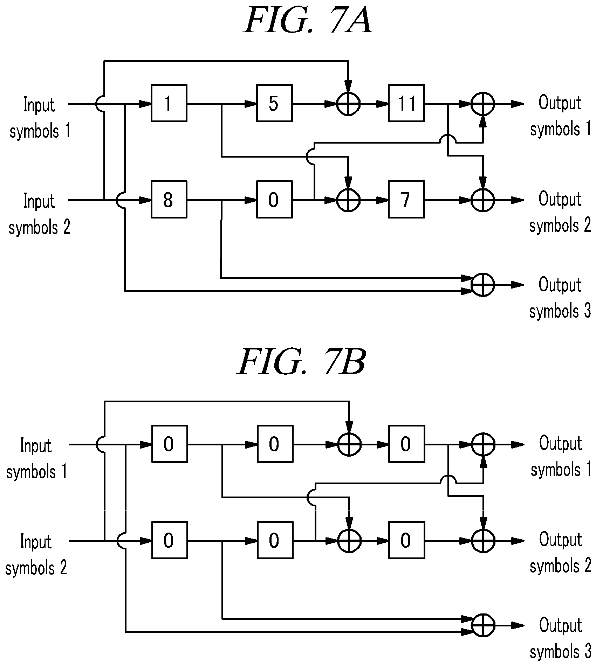

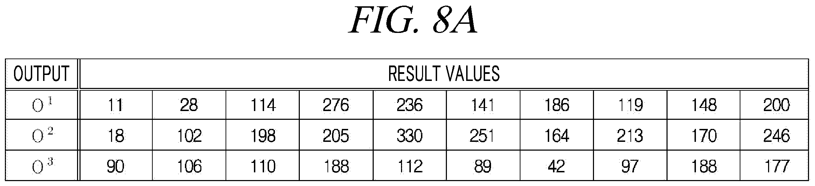

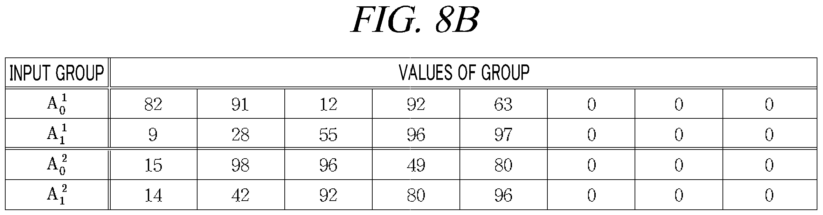

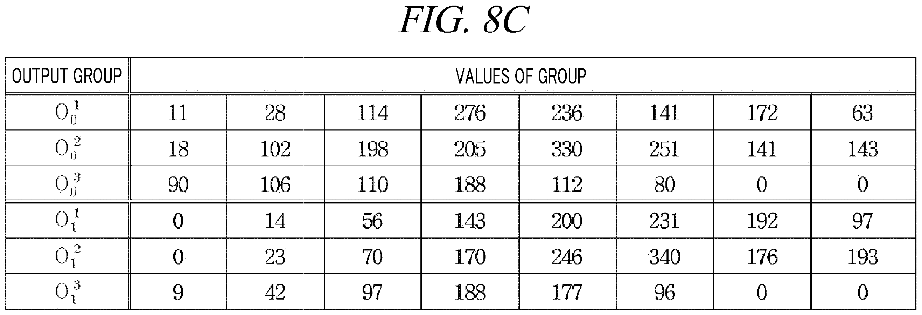

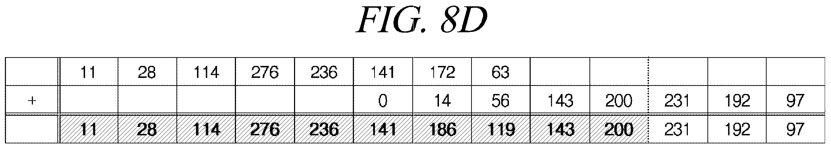

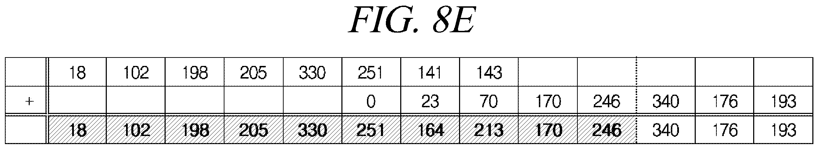

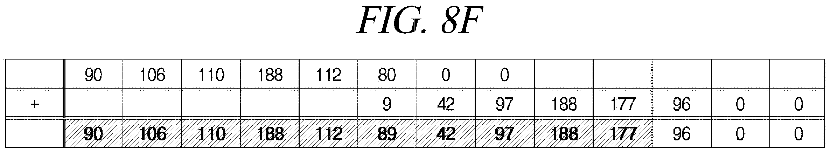

FIG. 7 and FIG. 8 are diagrams provided to explain digital signal processing according to another embodiment of the present disclosure. Herein, it is assumed that L is 2, M is 3, and G is 2.

As illustrated in FIG. 7A, a first linear feed forward shift register 510 includes multiple data storage units and combined operation elements, and 11, 5, and 1 are stored as initial values in data storage units of a register to which a first input signal is applied and 7, 0, and 8 are stored as initial values in data storage units of a register to which a second input signal is applied.

Further, a second linear feed forward shift register 520 illustrated in FIG. 7B has the same configuration as the first linear feed forward shift register 510, and 0 is stored as an initial value in each data storage unit.

In this case, it is assumed that 82, 91, 12, 92, 63, 9, 28, 55, 96, and 97 are input as first input signals and 15, 98, 96, 49, 80, 14, 42, 92, 80, and 96 are input as second input signals. If a single linear feed forward shift register is applied, output values as shown in FIG. 8A are output. A detailed description about a process of outputting the output values will be omitted, and the output values are calculated through the process described above with reference to FIG. 4C.

For example, if parallel processing is performed using the first linear feed forward shift register 510 and the second linear feed forward shift register 520, each input signal is divided into two groups and two input signal groups are generated for each input signal.

That is, as illustrated in FIG. 8B, each input signal is divided into two groups and zero padding is performed at the tail of each group a number of times corresponding to the number of data storage units.

In this case, a first input signal group $A_0^1$ of a first input signal and a first input signal group $A_0^2$ of a second input signal are input into the first linear feed forward shift register 510 and a second input signal group $A_1^1$ of the first input signal and a second input signal group $A_1^2$ of the second input signal are input into the second linear feed forward shift register 520.

FIG. 8C illustrates that values output from each linear feed forward shift register are arranged for each output signal group. Herein, the output signal groups are sequentially placed in different rows, respectively, as shifted by a predetermined value as shown in FIG. 8D to FIG. 8F.

That is, when a $t+1_{th}$ output signal group is placed after a $t_{th}$ output signal group is placed, the $t+1_{th}$ output signal group is shifted by a predetermined value from a column where a first value of the $t_{th}$ output signal group is located and then sequentially placed. In this case, the predetermined value refers to the number of input values of an input signal group corresponding to a previous output signal group, i.e., the number of input values of each input signal group before zero padding.

Referring to FIG. 8D to FIG. 8F, it can be confirmed that since the number of input values of each input signal group is 5, and, thus, the output signal groups are placed as shifted by 5.

In this way, while the output signal groups are placed in the respective rows, output values of each output signal group in each column are summed up and then values (shaded) except values corresponding in number to K in the last column are output as output signals. It can be seen that the summed-up value is identical to the above-described value output using the single linear feed forward shift register.

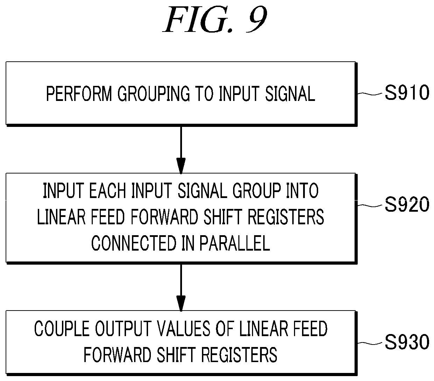

FIG. 9 is a flowchart provided to explain a signal processing method using a digital signal processing apparatus according to an embodiment of the present disclosure.

If an input signal is received, input signal groups corresponding in number to the number of linear feed forward shift registers connected for parallel processing are generated (S910).

In this case, each input signal group includes an input value included in an initial input signal and 0 added by zero padding. The number of Os added to each input signal group by zero padding is equal to the number of data storage units included in each linear feed forward shift register. Meanwhile, even if multiple input signals are applied to linear feed forward shift registers, input signal groups are generated for each input signal in the same manner.

Then, each input signal group is input into the linear feed forward shift registers connected in parallel to one another (S920).

For example, a $t_{th}$ input signal group is input into a $t_{th}$ linear feed forward shift register and a $t+1_{th}$ input signal group is input into a $t+1_{th}$ linear feed forward shift register. Meanwhile, if multiple input signals are applied to linear feed forward shift registers, the $t_{th}$ input signal group for first to $L_{th}$ input signals is input into the $t_{th}$ linear feed forward shift register and the $t+1_{th}$ input signal group for the first to $L_{th}$ input signals is input into the $t+1_{th}$ linear feed forward shift register.

Then, output signals output from the respective linear feed forward shift registers are coupled to generate a final output signal (S930).

The output signal groups output from the respective linear feed forward shift registers are placed in different rows, and when a $t+1_{th}$ output signal group is placed after a $t_{th}$ output signal group is placed, the $t+1_{th}$ output signal group is shifted by a predetermined value from a column where a first value of the $t_{th}$ output signal group is located and then sequentially placed. In this case, the predetermined value refers to the number of input values of an input signal group corresponding to a previous output signal group, i.e., the number of input values of each input signal group before zero padding.

Then, output values in each column are summed up and then values except values corresponding in number to the number of data storage units in the last column are output as output signals.

The embodiment of the present disclosure can be embodied in a storage medium including instruction codes executable by a computer such as a program module executed by the computer. A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The method and system of the present disclosure have been explained in relation to a specific embodiment, but their components or a part or all of their operations can be embodied by using a computer system having general-purpose hardware architecture.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present invention is defined by the following claims rather than by the detailed description of the embodiment. It shall be understood that all modifications and embodiments conceived from the meaning and scope of the claims are included in the scope of the present invention.

**Claims**

1. A digital signal processing apparatus (10) for processing of a digital signal, wherein the digital signal includes a telegram comprising input signals representing a location information of a train, comprising:

   a grouping unit (100; 400) configured to generate G input signal groups by dividing the input signals, in which N input values are sequentially connected, into G groups, wherein G is a natural number greater than 1 and N is a natural number greater than 1;
   G linear feed forward shift registers (200, 210, 220, 230; 500, 510, 520, 530) into which the input signal groups are input, respectively, the G linear feed forward shift registers being connected in parallel to one another; and
   an output unit (300; 600) configured to receive G output signal groups of the G linear feed forward shift registers and couple the G output signal groups to generate output signals in which N output values are sequentially connected,
   wherein each of the linear feed forward shift registers (200, 210, 220, 230; 500, 510, 520, 530) includes K data storage units (212, 214, 216, 218), wherein K is a natural number,
   the G linear feed forward shift registers are identical to each other,
   the grouping unit (100; 400) is configured to divide the input signals into the G groups and then to pad the tail of each group with K zeros to generate the input signal groups,
   the output unit (300; 600) is configured to receive each of the G output signal groups output by the G linear feed forward shift registers (200, 210, 220, 230; 500, 510, 520, 530), into which the G input signal groups are input, respectively,
   the output unit (300; 600) is configured to sequentially place each of the G output signal groups in a different row of a matrix, wherein the first output value of a $t+1_{th}$ output signal group is shifted to the right by a predetermined value from a column of the matrix where the first output value of a $t_{th}$ output signal group is located to place the $t+1_{th}$ output signal group, where the predetermined value for the $t+1_{th}$ output signal group refers to a number of input values of the $t_{th}$ input signal group, which corresponds to the $t_{th}$ output signal group, before the zero padding, and
   the output unit is configured to sum up output values of each output signal group in each column and then to output values except values corresponding to the last K columns with the output values as the output signals, wherein a predetermined initial value is stored in each of the data storage units of a first linear feed forward shift register (210; 510) into which an input signal group including first input values of the input signals are input, and
   0 is stored in each of the data storage units of other linear feed forward shift registers (220, 230; 520, 530).

2. A digital signal processing method of a digital signal, implemented by a digital signal processing apparatus (10), wherein the digital signal includes a telegram comprising input signals representing a location information of a train, comprising:

   generating G input signal groups (S910) by dividing the input signals, in which N input values are sequentially connected, into G groups, wherein G is a natural number greater than 1 and N is a natural number greater than 1;
   inputting (S920) the input signal groups respectively to the G linear feed forward shift registers (200, 210, 220, 230; 500, 510, 520, 530) which are connected in parallel to one another; and
   generating (S930) output signals, in which N output values are sequentially connected, by receiving G output signal groups of the G linear feed forward shift registers (200, 210, 220, 230; 500, 510, 520, 530) and coupling the G output signal groups,

wherein the G linear feed forward shift registers (200, 210, 220, 230; 500, 510, 520, 530) are identical to each other,

the step of generating of the input signal groups includes dividing the input signals into the G groups and then padding the tail of each group with K zeros, where K is a number of data storage units (212, 214, 216, 218) included in each of the linear feed forward shift registers (200; 500),

wherein K is a natural number,

the step of generating of the output signals includes:

receiving each of the G output signal groups output by the G linear feed forward shift registers (200, 210, 220, 230; 500, 510, 520, 530), into which the G input signal groups are input, respectively;

sequentially placing each of the G output signal groups in a different row of a matrix and wherein the first output value of a $t+1_{th}$ output signal group is shifted by a predetermined value from a column of the matrix where the first output value of a $t_{th}$ output signal group is located to place the $t+1_{th}$ output signal group; and summing up output values of each output signal group in each column and then outputting values except values corresponding to the last K columns with the output values, as the output signals, and the predetermined value for the $t+1_{th}$ output signal group refers to the number of input values of the $t_{th}$ input signal group, which corresponds to the $t_{th}$ output signal group, before the zero padding,

wherein a predetermined initial value is stored in each of the data storage units (212, 214, 216, 218) of a first linear feed forward shift register (210) into which an input signal group including first input values of the input signals are input, and

0 is stored in each of the data storage units (212, 214, 216, 218) of the other linear feed forward shift registers (220, 230).

## Patentansprüche

1. Digitalsignalverarbeitungsvorrichtung (10) zur Verarbeitung eines digitalen Signals, wobei das digitale Signal ein Telegramm umfasst, das Eingangssignale umfasst, die eine Ortsinformation eines Zugs darstellen, umfassend:

eine Gruppierungseinheit (100; 400), die ausgestaltet ist, um G Eingangssignalgruppen durch Aufteilen der Eingangssignale, bei denen N Eingangswerte sequenziell verbunden sind, in G Gruppen zu erzeugen, wobei G eine natürliche Zahl größer als 1 ist und N eine natürliche Zahl größer als 1 ist;

G lineare Vorwärtskopplungsschieberegister (200, 210, 220, 230; 500, 510, 520, 530), in die die Eingangssignalgruppen jeweils eingegeben werden, wobei die G linearen Vorwärtskopplungsschieberegister parallel miteinander verbunden sind; und

eine Ausgangseinheit (300; 600), die ausgestaltet ist, um die G Ausgangssignalgruppen der G linearen Vorwärtskopplungsschieberegister zu empfangen und die G Ausgangssignalgruppen zu koppeln, um Ausgangssignale zu erzeugen, bei denen N Ausgangswerte sequenziell verbunden sind,

wobei

jedes der linearen Vorwärtskopplungsschieberegister (200, 210, 220, 230; 500, 510, 520, 530) K Datenspeichereinheiten (212, 214, 216, 218) umfasst, wobei K eine natürliche Zahl ist,

die G linearen Vorwärtskopplungsschieberegister identisch zueinander sind,

die Gruppierungseinheit (100; 400) ausgestaltet ist, um die Eingangssignale in die G Gruppen aufzuteilen und dann den Rest jeder Gruppe mit K Nullen aufzufüllen, um die Eingangssignalgruppen zu erzeugen,

die Ausgangseinheit (300; 600) ausgestaltet ist, um jede der G Ausgangssignalgruppen, die durch die G linearen Vorwärtskopplungsschieberegister (200, 210, 220, 230; 500, 510, 520, 530), in die die G Eingangssignalgruppen jeweils eingegeben werden, ausgegeben werden, zu empfangen,

die Ausgangseinheit (300; 600) ausgestaltet ist, um jede der G Ausgangssignalgruppen in einer unterschiedlichen Zeile einer Matrix sequenziell anzuordnen, wobei der erste Ausgangswert einer t+1-ten Ausgangssignalgruppe um einen vorbestimmten Wert von einer Spalte der Matrix, an der der erste Ausgangswert einer t-ten Ausgangssignalgruppe angeordnet wird, nach rechts verschoben wird, um die t+1-te Ausgangssignalgruppe anzuordnen, wobei sich der vorbestimmte Wert für die t+1-te Ausgangssignalgruppe auf eine Anzahl von Eingangswerten der t-ten Eingangssignalgruppe, die der t-ten Ausgangssignalgruppe entspricht, vor dem Auffüllen mit Nullen bezieht, und

die Ausgangseinheit ausgestaltet ist, um Ausgangswerte jeder Ausgangssignalgruppe in jeder Spalte zu summieren und dann Werte abgesehen von Werten, die den letzten K Spalten mit den Ausgangswerten entsprechen, als die Ausgangssignale auszugeben,

wobei ein vorbestimmter Anfangswert in jeder der Datenspeichereinheiten eines ersten linearen Vorwärtskopplungsschieberegisters (210; 510), in das eine Eingangssignalgruppe, die erste Eingangswerte der Eingangssignale umfasst, eingegeben wird, gespeichert wird, und

0 in jeder der Datenspeichereinheiten anderer linearer Vorwärtskopplungsschieberegister (220, 230; 520, 530) gespeichert wird.

2. Verfahren zur digitalen Signalverarbeitung eines digitalen Signals, das durch eine Digitalsignalverarbeitungsvorrichtung (10) realisiert wird, wobei das digitale Signal ein Telegramm umfasst, das Eingangssignale umfasst, die eine Ortsinformation eines Zugs darstellen, umfassend, dass:

G Eingangssignalgruppen durch Aufteilen der Eingangssignale, bei denen N Eingangswerte sequenziell verbunden sind, in G Gruppen erzeugt werden (S910), wobei G eine natürliche Zahl größer als 1 ist und N eine natürliche Zahl größer als 1 ist;

die Eingangssignalgruppen jeweils in die G linearen Vorwärtskopplungsschieberegister (200, 210, 220, 230; 500, 510, 520, 530), die parallel miteinander verbunden sind, eingegeben werden (S920); und

Ausgangssignale, bei denen N Ausgangswerte sequenziell verbunden sind, durch Empfangen von G Ausgangssignalgruppen der G linearen Vorwärtskopplungsschieberegister (200, 210, 220, 230; 500, 510, 520, 530) und Koppeln der G Ausgangssignalgruppen erzeugt werden (S930),

wobei

die G linearen Vorwärtskopplungsschieberegister (200, 210, 220, 230; 500, 510, 520, 530) identisch zueinander sind,

der Schritt des Erzeugens der Eingangssignalgruppen umfasst, dass die Eingangssignale in die G Gruppen aufgeteilt werden und dann der Rest jeder Gruppe mit K Nullen aufgefüllt wird, wobei K eine Anzahl von Datenspeichereinheiten (212, 214, 216, 218) ist, die in jedem der linearen Vorwärtskopplungsschieberegister (200; 500) umfasst ist, wobei K eine natürliche Zahl ist,

der Schritt des Erzeugens der Ausgangssignale umfasst, dass:

jede der G Ausgangssignalgruppen, die durch die G linearen Vorwärtskopplungsschieberegister (200, 210, 220, 230; 500, 510, 520, 530), in die die G Eingangssignalgruppen jeweils eingegeben werden, ausgegeben werden, empfangen wird;

jede der G Ausgangssignalgruppen sequenziell in einer unterschiedlichen Zeile einer Matrix angeordnet wird, und wobei der erste Ausgangswert einer t+1-ten Ausgangssignalgruppe um einen vorbestimmten Wert von einer Spalte der Matrix, an der der erste Ausgangswert einer t-ten Ausgangssignalgruppe angeordnet wird, verschoben wird, um die t+1-te Ausgangssignalgruppe anzuordnen; und

Ausgangswerte jeder Ausgangssignalgruppe in jeder Spalte summiert werden und dann Werte abgesehen von Werten, die den letzten K Spalten mit den Ausgangswerten entsprechen, als die Ausgangssignale ausgegeben werden, und sich der vorbestimmte Wert für die t+1-te Ausgangssignalgruppe auf die Anzahl von Eingangswerten der t-ten Eingangssignalgruppe, die der t-ten Ausgangssignalgruppe entspricht, vor dem Auffüllen mit Nullen bezieht,

wobei ein vorbestimmter Anfangswert in jeder der Datenspeichereinheiten (212, 214, 216, 218) eines ersten linearen Vorwärtskopplungsschieberegisters (210), in das eine Eingangssignalgruppe, die erste Eingangswerte der Eingangssignale umfasst, eingegeben wird, gespeichert wird, und

0 in jeder der Datenspeichereinheiten (212, 214, 216, 218) der anderen linearen Vorwärtskopplungsschieberegister (220, 230) gespeichert wird.

## Revendications

1. Appareil de traitement de signal numérique (10) pour le traitement d'un signal numérique, dans lequel le signal numérique inclut un télégramme comprenant des signaux d'entrée représentant une information de localisation d'un train, comprenant :

une unité de groupement (100 ; 400) configurée pour générer G groupes de signaux d'entrée en divisant les signaux d'entrée, dans lesquels N valeurs d'entrée sont connectées séquentiellement, en G groupes, où G est un nombre naturel supérieur à 1 et N est un nombre naturel supérieur à 1 ;

G registres à décalage à action directe linéaire (200, 210, 220, 230 ; 500, 510, 520, 530) dans lesquels les groupes de signaux d'entrée sont respectivement entrés, les G registres à décalage à action directe linéaire étant connectés en parallèle les uns aux autres ; et

une unité de sortie (300 ; 600) configurée pour recevoir G groupes de signaux de sortie des G registres à décalage à action directe linéaire et coupler les G groupes de signaux de sortie pour générer des signaux de sortie dans lesquels N valeurs de sortie sont connectées séquentiellement, dans lequel chacun des registres à décalage à action directe linéaire (200, 210, 220, 230 ; 500, 510, 520, 530) inclut K unités de stockage de données (212, 214, 216, 218), où K est un nombre naturel,

les G registres à décalage à action directe linéaire sont identiques les uns aux autres,

l'unité de groupement (100 ; 400) est configurée pour diviser les signaux d'entrée en G groupes et ensuite pour remplir la queue de chaque groupe avec K zéros pour générer les groupes de signaux d'entrée,

l'unité de sortie (300 ; 600) est configurée pour recevoir chacun des G groupes de signaux de sortie délivrés par les G registres à décalage à action directe linéaire (200, 210, 220, 230 ; 500, 510, 520, 530) dans lesquels les G groupes de signaux d'entrée sont respectivement entrés,

l'unité de sortie (300 ; 600) est configurée pour placer séquentiellement chacun des G groupes de signaux de sortie dans une ligne différente d'une matrice, dans lequel la première valeur de sortie d'un t+1$^{ème}$ groupe de signaux de sortie est décalée vers la droite d'une valeur prédéterminée à partir d'une colonne de la matrice où la première valeur de sortie d'un t$^{ème}$ groupe de signaux de sortie est située pour placer le t+1$^{ème}$ groupe de signaux de sortie, où la valeur prédéterminée pour le t+1$^{ème}$ groupe de signaux de sortie se réfère à un nombre de valeurs d'entrée du t$^{ème}$ groupe de signaux d'entrée, qui correspond au t$^{ème}$ groupe de signaux de sortie, avant le remplissage par des zéros, et

l'unité de sortie est configurée pour additionner les valeurs de sortie de chaque groupe de signaux de sortie dans chaque colonne et ensuite pour délivrer les valeurs, à l'exception des valeurs correspondant aux K dernières colonnes avec les valeurs de sortie, en tant que signaux de sortie,

dans lequel une valeur initiale prédéterminée est stockée dans chacune des unités de stockage de données d'un premier registre à décalage à action directe linéaire (210; 510) dans lequel un groupe de signaux d'entrée incluant des premières valeurs d'entrée des signaux d'entrée est entré, et

0 est stocké dans chacune des unités de stockage de données d'autres registres à décalage à action directe linéaire (220, 230 ; 520, 530).

2. Procédé de traitement de signal numérique d'un signal numérique, mis en oeuvre par un appareil de traitement de signal numérique (10), dans lequel le signal numérique inclut un télégramme comprenant des signaux d'entrée représentant une information de localisation d'un train, comprenant les étapes consistant à :

générer G groupes de signaux d'entrée (S910) en divisant les signaux d'entrée, dans lesquels N valeurs d'entrée sont connectées séquentiellement, en G groupes, où G est un nombre naturel supérieur à 1 et N est un nombre naturel supérieur à 1 ;

entrer (S920) les groupes de signaux d'entrée respectivement dans les G registres à décalage à action directe linéaire (200, 210, 220, 230 ; 500, 510, 520, 530) qui sont connectés en parallèle les uns aux autres ; et

générer (S930) des signaux de sortie, dans lesquels N valeurs de sortie sont connectées séquentiellement, en recevant G groupes de signaux de sortie des G registres à décalage à action directe linéaire (200, 210, 220, 230 ; 500, 510, 520, 530) et en couplant les G groupes de signaux de sortie,

dans lequel les G registres à décalage à action directe linéaire (200, 210, 220, 230 ; 500, 510, 520, 530) sont identiques les uns aux autres,

l'étape consistant à générer les groupes de signaux d'entrée inclut les étapes consistant à diviser les signaux d'entrée en G groupes et ensuite à remplir la queue de chaque groupe avec K zéros, où K est un nombre d'unités de stockage de données (212, 214, 216, 218) incluses dans chacun des registres à décalage à action directe linéaire (200 ; 500), où K est un nombre naturel,

l'étape consistant à générer les signaux de sortie inclut les étapes consistant à :

recevoir chacun des G groupes de signaux de sortie délivrés par les G registres à décalage à action directe linéaire (200, 210, 220, 230 ; 500, 510, 520, 530) dans lesquels les G groupes de signaux d'entrée sont respectivement entrés ;

placer séquentiellement chacun des G groupes de signaux de sortie dans une ligne différente d'une matrice et dans lequel la première valeur de sortie d'un t+1$^{ème}$ groupe de signaux de sortie est décalée d'une valeur prédéterminée par rapport à une colonne de la matrice où la première valeur de sortie d'un t$^{ème}$ groupe de signaux de sortie est située pour placer le t+1$^{ème}$ groupe de signaux de sortie ; et

additionner les valeurs de sortie de chaque groupe de signaux de sortie dans chaque colonne et ensuite délivrer les valeurs, à l'exception des valeurs correspondant aux K dernières colonnes avec les valeurs de sortie, en tant que signaux de sortie, et la valeur prédéterminée pour le t+1$^{ème}$ groupe de signaux de sortie se réfère au nombre de valeurs d'entrée du t$^{ème}$ groupe de signaux d'entrée, qui correspond au t$^{ème}$ groupe de signaux de sortie, avant le remplissage par des zéros,

dans lequel une valeur initiale prédéterminée est stockée dans chacune des unités de stockage de données (212, 214, 216, 218) d'un premier registre à décalage à action directe linéaire (210) dans lequel un groupe de signaux d'entrée incluant des premières valeurs d'entrée des signaux d'entrée est entré, et
0 est stocké dans chacune des unités de stockage de données (212, 214, 216, 218) des autres registres à décalage à action directe linéaire (220, 230).

EP 3 355 476 B1

## FIG. 1

# FIG. 2

Input symbols → $a_k$ → [ $s_k$ ] 212 → $a_{k-1}$ → ⊕ Comb($a_k$) → [ $s_{k-1}$ ] 214 → $a_{k-2}$ → ⊕ Comb($a_k, a_{k-1}$) → · · · → [ $s_2$ ] 216 → $a_1$ → ⊕ Comb($a_k, a_{k-1}, \cdots, a_2$) → [ $s_1$ ] 218 → ⊕ Comb($a_k, a_{k-1}, \cdots, a_2, a_1$) → Output symbols

EP 3 355 476 B1

# FIG. 3

| | $P_{t-1}$ | | | $k$ | | | | | $P_t$ | | |
|---|---|---|---|---|---|---|---|---|---|---|---|
| | $o_0^{t-1}$ | $o_1^{t-1}$ | $\cdots$ $o_{p_{t-1}-1}^{t-1}$ | $o_{p_{t-1}}^{t-1}$ | $o_{p_{t-1}+1}^{t-1}$ | $\cdots$ | $o_{p_{t-1}+k-2}^{t-1}$ | $o_{p_{t-1}+k-1}^{t-1}$ | | | |
| $+$ | | | | $o_0^t$ | $o_1^t$ | $\cdots$ | $o_{k-2}^t$ | $o_{k-1}^t$ | $o_k^t$ | $\cdots$ $o_{p_t+k-2}^t$ | $o_{p_t+k-1}^t$ |

*FIG. 4A*

# FIG. 4B

## FIG. 4C

| INPUT | FIRST STORAGE UNIT | SECOND STORAGE UNIT | FIRST COMBINED OPERATION ELEMENT | THIRD STORAGE UNIT | FOURTH STORAGE UNIT | SECOND COMBINED OPERATION ELEMENT | FIFTH STORAGE UNIT | THIRD COMBINED OPERATION ELEMENT (OUTPUT) |
|---|---|---|---|---|---|---|---|---|
| 15 | 10 | 0 | 15 | 9 | 0 | 0 | 1 | 25 |
| 98 | 15 | 10 | 108 | 15 | 9 | 19 | 0 | 113 |
| 0 | 98 | 15 | 15 | 108 | 15 | 30 | 19 | 127 |
| 0 | 0 | 98 | 98 | 15 | 108 | 206 | 30 | 45 |
| 0 | 0 | 0 | 0 | 98 | 15 | 15 | 206 | 304 |
| 0 | 0 | 0 | 0 | 0 | 98 | 98 | 15 | 15 |
| 0 | 0 | 0 | 0 | 0 | 0 | 0 | 98 | 98 |

## FIG. 5A

| INPUT GROUP | VALUES OF GROUP | | | | | | |
|---|---|---|---|---|---|---|---|
| $A_0$ | 15 | 98 | 0 | 0 | 0 | 0 | 0 |
| $A_1$ | 96 | 49 | 0 | 0 | 0 | 0 | 0 |
| $A_2$ | 80 | 14 | 0 | 0 | 0 | 0 | 0 |
| $A_3$ | 42 | 92 | 0 | 0 | 0 | 0 | 0 |
| $A_4$ | 80 | 96 | 0 | 0 | 0 | 0 | 0 |

EP 3 355 476 B1

## FIG. 5B

| OUTPUT GROUP | VALUES OF GROUP | | | | | | |
|:---:|:---:|:---:|:---:|:---:|:---:|:---:|:---:|
| $O_0$ | 25 | 113 | 127 | 45 | 304 | 15 | 98 |
| $O_1$ | 96 | 145 | 49 | 288 | 147 | 96 | 49 |
| $O_2$ | 80 | 94 | 14 | 240 | 42 | 80 | 14 |
| $O_3$ | 42 | 134 | 92 | 126 | 276 | 42 | 92 |
| $O_4$ | 80 | 176 | 96 | 240 | 288 | 80 | 96 |

## FIG. 5C

| | 25 | 113 | 127 | 45 | 304 | 15 | 98 | | | | | | | | |
|---|---|---|---|---|---|---|---|---|---|---|---|---|---|---|---|
| | | | 96 | 145 | 49 | 288 | 147 | 96 | 49 | | | | | | |
| | | | | | 80 | 94 | 14 | 240 | 42 | 80 | 14 | | | | |
| | | | | | | | 42 | 134 | 92 | 126 | 276 | 42 | 92 | | |
| + | | | | | | | | | 80 | 176 | 96 | 240 | 288 | 80 | 96 |
| | 25 | 113 | 223 | 190 | 433 | 397 | 301 | 470 | 263 | 382 | 386 | 282 | 380 | 80 | 96 |

## FIG. 6

EP 3 355 476 B1

# FIG. 7A

# FIG. 7B

FIG. 8A

| OUTPUT | RESULT VALUES | | | | | | | | | |
|--------|----|-----|-----|-----|-----|-----|-----|-----|-----|-----|
| $O^1$ | 11 | 28 | 114 | 276 | 236 | 141 | 186 | 119 | 148 | 200 |
| $O^2$ | 18 | 102 | 198 | 205 | 330 | 251 | 164 | 213 | 170 | 246 |
| $O^3$ | 90 | 106 | 110 | 188 | 112 | 89 | 42 | 97 | 188 | 177 |

## FIG. 8B

| INPUT GROUP | VALUES OF GROUP | | | | | | | |
|---|---|---|---|---|---|---|---|---|
| $A_0^1$ | 82 | 91 | 12 | 92 | 63 | 0 | 0 | 0 |
| $A_1^1$ | 9 | 28 | 55 | 96 | 97 | 0 | 0 | 0 |
| $A_0^2$ | 15 | 98 | 96 | 49 | 80 | 0 | 0 | 0 |
| $A_1^2$ | 14 | 42 | 92 | 80 | 96 | 0 | 0 | 0 |

FIG. 8C

| OUTPUT GROUP | VALUES OF GROUP | | | | | | | |
|---|---|---|---|---|---|---|---|---|
| $O_0^1$ | 11 | 28 | 114 | 276 | 236 | 141 | 172 | 63 |
| $O_0^2$ | 18 | 102 | 198 | 205 | 330 | 251 | 141 | 143 |
| $O_0^3$ | 90 | 106 | 110 | 188 | 112 | 80 | 0 | 0 |
| $O_1^1$ | 0 | 14 | 56 | 143 | 200 | 231 | 192 | 97 |
| $O_1^2$ | 0 | 23 | 70 | 170 | 246 | 340 | 176 | 193 |
| $O_1^3$ | 9 | 42 | 97 | 188 | 177 | 96 | 0 | 0 |

EP 3 355 476 B1

EP 3 355 476 B1

## FIG. 8D

|   | 11 | 28 | 114 | 276 | 236 | 141 | 172 | 63 |  |  |  |  |  |
|---|----|----|-----|-----|-----|-----|-----|----|--|--|--|--|--|
| + |    |    |     |     |     | 0 | 14 | 56 | 143 | 200 | 231 | 192 | 97 |
|   | 11 | 28 | 114 | 276 | 236 | 141 | 186 | 119 | 143 | 200 | 231 | 192 | 97 |

## FIG. 8E

| | | | | | | | | | | | | | |
|---|---|---|---|---|---|---|---|---|---|---|---|---|---|
| | 18 | 102 | 198 | 205 | 330 | 251 | 141 | 143 | | | | | |
| + | | | | | | 0 | 23 | 70 | 170 | 246 | 340 | 176 | 193 |
| | 18 | 102 | 198 | 205 | 330 | 251 | 164 | 213 | 170 | 246 | 340 | 176 | 193 |

EP 3 355 476 B1

## FIG. 8F

| | | | | | | | | | | | | | |
|---|---|---|---|---|---|---|---|---|---|---|---|---|---|
| | 90 | 106 | 110 | 188 | 112 | 80 | 0 | 0 | | | | | |
| + | | | | | | 9 | 42 | 97 | 188 | 177 | 96 | 0 | 0 |
| | 90 | 106 | 110 | 188 | 112 | 89 | 42 | 97 | 188 | 177 | 96 | 0 | 0 |

# FIG. 9

| PERFORM GROUPING TO INPUT SIGNAL | S910 |

↓

| INPUT EACH INPUT SIGNAL GROUP INTO LINEAR FEED FORWARD SHIFT REGISTERS CONNECTED IN PARALLEL | S920 |

↓

| COUPLE OUTPUT VALUES OF LINEAR FEED FORWARD SHIFT REGISTERS | S930 |

**EP 3 355 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020150039141
- US 6598203 B1